# EUROPÄISCHE PATENTSCHRIFT

(11) **EP 1 745 407 B1**
(45) Veröffentlichungstag und Bekanntmachung des Hinweises auf die Patenterteilung: **02.03.2011**
(21) Anmeldenummer: 05737397.9
(22) Anmeldetag: 04.05.2005
(51) Int. Cl.: G06K 7/10

(54) **LESEGERÄT ZUM AUSLESEN VON COMPUTERGENERIERTEN LITHOGRAMMEN**
READING DEVICE FOR READING OUT COMPUTER-GENERATED LITHOGRAMS
APPAREIL DE LECTURE CONCU POUR EXTRAIRE DES LITHOGRAMMES PRODUITS PAR ORDINATEUR

(30) Priorität: 10.05.2004 DE 202004007636 U
(43) Veröffentlichungstag der Anmeldung: 24.01.2007
(73) Patentinhaber: tesa scribos GmbH, 69126 Heidelberg (DE)
(72) Erfinder: DIETRICH, Christoph, 69126 Heidelberg (DE); SCHULTE-WIEKING, Kay, 69115 Heidelberg (DE); THOMANN, Robert, 69121 Heidelberg (DE); SCHEIBENSTOCK, Steffen, 70178 Stuttgart (DE)
(74) Vertreter: Rox, Thomas
(86) Internationale Anmeldenummer: PCT/EP2005/004859
(87) Internationale Veröffentlichungsnummer: WO 2005/111913

(56) Entgegenhaltungen:
- WO-A-02/31749
- US-A1- 2002 023 961
- US-A1- 2002 088 861
- US-B1- 6 177 683
- US-B1- 6 330 975

## Beschreibung

Die vorliegende Erfindung betrifft ein Lesegerät zum Auslesen von computergenerierten Lithogrammen.

Computergenerierte Lithogramme sind zweidimensionale Punktmatrizen bevorzugt mit sehr geringen Abmessungen, die aus einzelnen Punkten mit unterschiedlichen optischen Eigenschaften bestehen. Die Lithogramme sind bevorzugt als Hologramme ausgebildet, jedoch können mit den Lithogrammen auch direkt lesbare, also ohne Beugung der auftreffenden Lichtes Mikrotexte oder Mikroabbildungen erzeugt werden.

Durch Beleuchtung eines computergenerierten Hologramms bspw. mit einer kohärenten elektromagnetischen Welle, insbesondere Lichtwelle durch Beugung in Transmission oder Reflexion Bilder und/oder Daten reproduziert werden. Die unterschiedlichen optischen Eigenschaften der einzelnen Punkte können Reflexionseigenschaften beispielsweise durch Oberflächentopographie, variierende optische Weglängen im Material des Speichermediums (Brechungsindizes) oder Farbwerte des Materials sein.

Die optischen Eigenschaften der einzelnen Punkte werden von einem Computer berechnet, es handelt sich somit um sogenannte computergenerierte Hologramme (CGH) bzw. allgemein um computergenerierte Lithogramme. Mit Hilfe des fokussierten Schreibstrahls werden während des Schreibens die einzelnen Punkte des Lithogramms in das Material eingeschrieben, wobei der Fokus im Bereich der Oberfläche oder im Material des Speichermediums liegt. Eine Fokussierung bewirkt im Bereich des Fokus eine geringe Einwirkungsfläche auf das Material des Speichermediums, so dass eine Vielzahl von Punkten des Lithogramms in einem kleinen Bereich geschrieben werden kann.

Durch ein Abscannnen eines intensitätsmodulierten Schreibstrahls entsteht somit eine Fläche mit einer unregelmäßigen Punkteverteilung, das computergenerierte Lithogramm. Dieses kann zum Kennzeichnen, Identifizieren und Individualisieren beliebiger Gegenstände eingesetzt werden.

Bei der Herstellung von Lithogrammen ist eine Auflösung von etwa 25.000 dpi bevorzugt. Außerdem werden bei der computergenerierten Lithographie nur vergleichsweise kleine Flächen beschrieben. Diese sind beispielsweise 1 bis 5 mm² groß, wobei auch andere Größen möglich sind. Die Genauigkeit des Schreibrasters muss bei einem Lithographen zur Herstellung digitaler Hologramme von beispielsweise 1000 x 1000 Punkten auf einer Fläche von 1 x 1 mm² etwa ± 0,1 µm in beide orthogonale Richtungen betragen. Darüber hinaus sollte die Schreibgeschwindigkeit etwa 1 Mpixel/s betragen, damit jeweils,ein Lithogramm in einer Zeit von ca. 1s oder weniger geschrieben werden kann.

Die zuvor erläuterten computergenerierten Lithogramme können unterschiedliche Informationen tragen. Zum einen kann das computergenerierte Lithogramm eine holographische Information tragen, die beim Auslesen, also bei der Reproduktion eine direkt lesbare Information (Schrift, Bild, Graphik) wiedergibt. Ebenso kann die ausgelesene Information verschlüsselt, insbesondere digitalisiert sein. Dann enthält das reproduzierte Hologramm beispielsweise eine digitale Matrix ähnlich einem ein- oder zweidimensionalen Barcode. Schließlich kann die Punkteverteilung des computergenerierten Lithogramms an sich eine direkt lesbare Information.mit sehr kleinen Abmessungen aufweisen, beispielsweise eine Mikroschrift oder eine Mikroabbildung. Zum Erkennen ist eine Vergrößerung der direkt lesbaren Mikroschrift notwendig, also ein vom Auslesen des digitalen Hologramms verschiedener Vorgang. Die Mikroschrift und/oder die Mikroabbildung selbst kann wiederum verschlüsselt sein. Beispielsweise kann eine Mikroabbildung selbst eine digitale Information eine ein- oder zweidimensionalen Barcodes darstellen. Selbstverständlich kann ein Lithogramm sowohl eine holographische Information als auch eine direkt lesbare Information beinhalten, also eine Kombination aller dargestellten Möglichkeiten.

Zum Auslesen von computergenerierten Hologrammen sind einfache Handlesegeräte aus dem Stand der Technik bekannt. Diese bedienen sich in der Regel eines Lichtstrahls zum Erzeugen des reproduzierten Hologramms auf einem Schirm.

Aus der US 2002/0088861 A1 ist ein Handlesegerät mit den Merkmalen des Oberbegriffs von Anspruch 1 bekannt, von dem die Erfindung ausgeht.

Darüber hinaus sind nicht tragbare, fest installierte Lesegeräte bekannt, die die ausgelesenen Informationen auf einem Computerbildschirm darstellen.

Die Technik der Verwendung von computergenerierten Lithogrammen hat inzwischen zu verschiedenen Anwendungen geführt, bei denen einzelne Produkte mit kleinen Labeln versehen werden, auf denen jeweils ein Hologramm eingeschrieben ist. In mehreren Stufen können die verwendeten Lithogramme individualisiert und/oder kodiert sein, wobei beliebige Kombinationen von Mikroschriften und Mikrobildern, direkt lesbare holographische Information und wiederum im Hologramm kodiert hinterlegte, bspw. digitalisierte Informationen miteinander kombiniert werden können. Eine für die Überprüfung der verschiedenen Information mit einem Lesegerät ist bisher nicht möglich gewesen, insbesondere nicht mit einem Handlesegerät.

In den Dokumenten WO 02/31749 A1, US 2002/0023961 A1, US 6,177,683 B1 und US 6,330,975 B1 sind Barcode-Lesegeräte beschrieben.

Der vorliegenden Erfindung liegt das technische Problem zugrunde, ein handliches Lesegerät anzugeben, das ein schnelleres und einfacheres Auslesen von kleinen computergenerierten Lithogrammen ermöglicht.

Das zuvor aufgezeigte technische Problem wird erfindungsgemäß durch ein Lesegerät mit den Merkmalen des Anspruchs 1 gelöst. Weitere bevorzugte Ausgestaltungen des Lesegerätes sind in den Unteransprüchen angegeben.

Erfindungsgemäß ist das Lesegerät zum Auslesen von computergenerierten Lithogrammen, die in einem Speichermedium eingeschrieben sind, mit einer Lichtquelle zum Erzeugen eines Lichtstrahls, mit Aufnahmemitteln zum Erfassen der vom Lichtstrahl durch eine Beleuchtung des Lithogramms erzeugten Bilddaten und mit Anzeigemitteln zum Anzeigen der aus den Bilddaten erzeugten Anzeigedaten versehen, wobei sämtliche Komponenten in einer tragbaren Handheld-Einheit zusammengefasst sind.

Der Begriff Handheld-Einheit leitet sich aus dem Anwendungsbereich der tragbaren Computer, die auch als Handheld-Computer oder als Personal Digital Assistant (PDA) bezeichnet werden. Auch hier sind sämtliche Computerfunktionen in einem kleinen handlichen Gehäuse angeordnet, so dass ein mobil zu nutzender, nicht an einen festen Standort gebundener Computer entsteht. Das gleiche Prinzip wird bei der vorliegenden Erfindung für das Handlesegerät zum Auslesen von computergenerierten Lithogrammen angewendet. Sämtliche zuvor erwähnten Grundkomponenten - wie auch alle weiteren im Folgenden beschriebenen Komponenten - sind in einer handlichen Einheit, also einer Handheld-Einheit zusammengefasst. Das Lesegerät wird daher im Folgenden auch als Handlesegerät bezeichnet.

Das Handlesegerät ist dazu geeignet, den Lichtstrahl, der insbesondere als Laserstrahl ausgebildet sein kann, auf das computergenerierte Lithogramm zu richten und das durch Beugungseffekte erzeugte reproduzierte Hologramm und/oder das direkt lesbare Mikrobild aufzunehmen. Dabei wird das Handlesegerät so an das das Lithogramm tragende Objekt, bspw. an eine Verpackung eines Produktes, herangeführt, dass der Lichtstrahl das Lithogramm trifft.

Ebenso ist es möglich, bei Objekten mit einer definierten Form eine Halterung vorzusehen, in die das Objekt mit dem Speichermedium oder das Speichermedium selbst eingebracht wird und positioniert wird. Die Halterung ist daher insbesondere für Scheckkarten oder ähnliches geeignet.

In bevorzugter Weise sind die Aufnahmemittel elektronisch, insbesondere als herkömmlicher CCD-Chip oder als CMOS-Chip ausgebildet. Dadurch wird ein preiswerter Einsatz einer Standardtechnik für das Handlesegerät möglich.

In einer ersten bevorzugten Ausgestaltung der vorliegenden Erfindung sind die Aufnahmemittel direkt mit den Anzeigemitteln verbunden. Die Anzeigemittel können bedarfsweise die Bilddaten als Anzeigedaten darstellen. Dadurch wird in einfacher Weise das Überprüfen des reproduzierten Hologramms ermöglicht, um darin enthaltene direkt lesbare Informationen identifizieren zu können.

Als vorteilhafte Anzeigemittel können beispielsweise herkömmliche Displays für mobile Telefone verwendet werden. Auch durch diese Maßnahme kann eine kostengünstige Lösung geschaffen werden.

Bei einer weiteren bevorzugten Ausgestaltung der vorliegenden Erfindung sind Auswertemittel zum Auswerten der Bilddaten und zum Erzeugen der Anzeigedaten vorgesehen. Somit können die von den Aufnahmemitteln erzeugten Bilddaten einer Analyse unterzogen werden.

Die Analyse der Bilddaten kann so durchgeführt werden, dass ein oder mehrere Bereiche der Bilddaten ausgewählt und gesondert nacheinander oder parallel als Anzeigedaten auf den Anzeigemitteln dargestellt werden. Dadurch können die Bilddaten vergrößert und/oder in einer speziellen Auswahl dargestellt werden. Ebenso können die gesamten Bilddaten als Anzeigedaten dargestellt werden.

Eine weitere Analyse der Bilddaten besteht darin, die Anzeigedaten zumindest teilweise aus den Bilddaten abzuleiten. Dieses kann dann zur Anwendung kommen, wenn das reproduzierte Hologramm Daten in kodierter Form enthält. So ist es bekannt, in einem computergenerierten Hologramm eindimensionale oder zweidimensionale Barcodes zu hinterlegen. Diese Barcodes sind dann im reproduzierten Hologramm als dunkle und helle Bereiche zu erkennen. Die in dem Barcode steckenden Informationen können dann nur durch eine weitere Analyse ermittelt werden. Nach der Analyse können diese Informationen dann auf den Anzeigemitteln als lesbarer Text dargestellt werden.

Um zwischen der Darstellung des reproduzierten Hologramms und den daraus ermittelten Daten umschalten zu können, sind in bevorzugter Weise Schaltmittel zum Einstellen der Art der Bilddaten vorgesehen. Ebenso kann damit eine Einstellung gewählt werden, bei der die verschiedenen Informationen (Mikrobild, Hologramm, abgeleitete Informationen) gleichzeitig auf den Anzeigemitteln dargestellt werden.

Ebenso können Speichermittel zum Abspeichern einer Mehrzahl von aufgenommenen Bilddaten vorgesehen sein. Somit kann eine Reihe von computergenerierten Hologrammen analysiert werden, ohne dass zwischendurch eine Datenübertragung oder -sicherung erfolgen muss. Dabei reicht es insbesondere aus, wenn nur die direkt lesbaren oder aus einer kodierten Form abgeleiteten Informationen in binärer Form gespeichert werden.

Das Lesegerät der vorliegenden Erfindung umfasst eine Lupenlinse als Justiermittel. Die Lupenlinse dient einem besseren freihändigen Justieren des Lesegerätes relativ zur Position des Lithogrammes. Der Benutzer des Lesegerätes kann durch die Lupenlinse die Position des Lichtstrahls auf dem Speichermedium bzw. auf dem Objekt in vergrößerter Darstellung direkt beobachten. Wenn der Lichtfleck genau den Bereich erfasst, der vom Lithogramm eingenommen ist, kann der Benutzer einen Auslöser aktivieren, um die Bilddaten von den Aufnahmemitteln festzuhalten.

Die Lupenlinse kann außerhalb oder innerhalb des Strahlengangs des Lichtstrahls angeordnet sein. Je nach Anordnung wird also der Lichtstrahl durch die Lupenlinse beeinflusst. Daher ist es bei der Anordnung der Lupenlinse im Strahlengang erforderlich, den Lichtstrahl divergent auf die Lupenlinse zu richten, damit hinter der Lupenlinse der Lichtstrahl weitgehend ein paralleles Strahlenbündel darstellt und nicht auf die Beobachtungsebene fokussiert wird.

Ein Auffinden des kleinen Lithogramms ist alleine mit dem Laserstrahl unter bestimmten Bedingungen nur unter erschwerten Bedingungen möglich. Daher ist es bevorzugt, eine weitere Lichtquelle, insbesondere eine weißes Licht produzierende LED vorzusehen, die den Suchbereich ausleuchtet und ein Erkennen der Position des kleinen Lithogramms erleichtert.

Ebenso ist es möglich, dass die Auswertemittel die fortlaufend von den Aufnahmemitteln erfassten Bilddaten analysieren und bei einer geeigneten Position des reproduzierten Hologramms auf den Aufnahmemitteln die Bilddaten festhalten. Diese Analyse kann anhand von vorgegebenen Informationseinheiten, bspw. ein Erkennungsmuster; innerhalb des reproduzierten Hologramms erfolgen. Sind die Informationseinheiten relativ zur Bildebene der Aufnahmemittel an vorbestimmten Positionen von den Auswertemitteln zu erkennen, werden die Bilddaten festgehalten.

Um das Festhalten der Bilddaten dem Benutzer zu signalisieren, ist ein akustischer und/oder optischer Signalgeber vorgesehen. Wird der Signalgeber aktiviert, erkennt der Benutzer, dass das von ihm auszulesende Hologramm erkannt und ggf. gespeichert worden ist.

Anstelle des Auges des Benutzers oder zusätzlich dazu können weitere Aufnahmemittel zum Aufnehmen des vom Speichermedium reflektierten Lichtes vorgesehen sein. Somit wird die Punkteverteilung des computergenerierten Lithogramms an sich, also nicht das reproduzierte Hologramm erfasst, um beispielsweise eine miniaturisierte Abbildung oder Mikroschrift erfassen und auf den Anzeigemitteln darstellen zu können. Der Benutzer kann dann auf den Anzeigemitteln die Position des Lichtstrahls auf dem Objekt bzw. auf dem Speichermedium auf den Anzeigemitteln überprüfen und somit das Handlesegerät justieren.

Somit ist es in einem Handlesegerät möglich, die Punkteverteilung mit ggf. vorhandener Mikroschrift oder Mikroabbildungen darzustellen. Dieses gilt auch in Alleinstellung, also ohne dass das Handlesegerät auch in der Lage sein muss, ein reproduziertes Hologramm verarbeiten zu können.

Es ist aber bevorzugt, dass das Handlesegerät neben dem Erkennen der Mikroschrift bzw. der Mikroabbildung auch das reproduzierte Hologramm mit darin enthaltenen Informationen und/oder die aus dem reproduzierten Hologramm abgeleiteten Informationen auf den Anzeigemitteln darstellen kann. Die verschiedenen Sicherheitsmerkmale des auf dem Speichermedium eingeschriebenen Lithogramms können somit wahlweise angezeigt werden.

Bei einer weiteren bevorzugten Ausführungsform der vorliegenden Erfindung sind in einem optischen Block zumindest die Lichtquelle und die Aufnahmemittel angeordnet, während in einem Auswerteblock zumindest die Auswertemittel und die Anzeigemittel angeordnet sind. Der optische Block und der Auswerteblock sind über eine elektronische und/oder optische Schnittstelle und/oder eine Funkschnittstelle miteinander verbunden, so dass die von den Aufnahmemitteln erzeugten Bilddaten auf die Auswertemittel übertragen werden können. Durch diesen Aufbau entsteht ein modularer Aufbau, so dass flexibel auf Veränderungen an einem der beiden verschiedenen Funktionsblöcke durch Austausch eines der beiden Blöcke reagiert werden kann.

Um trotz der Modularität der beiden beschriebenen Blöcke eine Handheld-Einheit zu bilden, sind der optische Block und der Auswerteblock auf einer gemeinsamen Halterung angeordnet. Diese Halterung kann auch Teil eines der beiden Blöcke, bspw. des optischen Blockes sein, in die der andere Block, bspw. der Auswerteblock aufgesetzt werden kann.

Der modulare Aufbau kommt insbesondere dem Umstand zugute, dass der Auswerteblock als serienmäßiger Handheld-Computer (PDA) ausgebildet ist. Da die technische Entwicklung auf diesem Gebiet sehr schnell verläuft und die Produktzyklen sehr kurz sind, kann als Ersatz für einen beschädigten Auswerteblock ein aktuelles neueres Modell eines Handheld-Computers eingesetzt werden. Die Schnittstellen sind daher in bevorzugter Weise ebenfalls standardisiert, um die Austauschbarkeit der beiden Blöcke zueinander zu gewährleisten.

Im folgenden wird die Erfindung anhand von Ausführungsbeispielen näher erläutert, wobei auf die beigefügte Zeichnung Bezug genommen wird. In der Zeichnung zeigen
- Fig. 1: ein Ausführungsbeispiel eines erfindungsgemäßen Handlesegerätes in perspektivischer Darstellung,
- Fig. 2: ein erstes Ausführungsbeispiel des Aufbaus der Komponenten des Handlesegerätes in einer schematischen Darstellung,
- Fig. 3: ein zweites Ausführungsbeispiel des Aufbaus der Komponenten des Handlesegerätes in einer schematischen Darstellung,
- Fig. 4: ein drittes Ausführungsbeispiel des Aufbaus der Komponenten des Handlesegerätes in einer schematischen Darstellung,
- Fig. 5: ein viertes Ausführungsbeispiel des Aufbaus der Komponenten des Handlesegerätes in einer schematischen Darstellung,
- Fig. 6a-c: Darstellungen des Handlesegerätes mit unterschiedlichen bildlichen Inhalten der Anzeigemittel und
- Fig. 7: ein Ausführungsbeispiel eines erfindungsgemäßen Handlesegerätes mit modularem Aufbau in perspektivischer Darstellung.

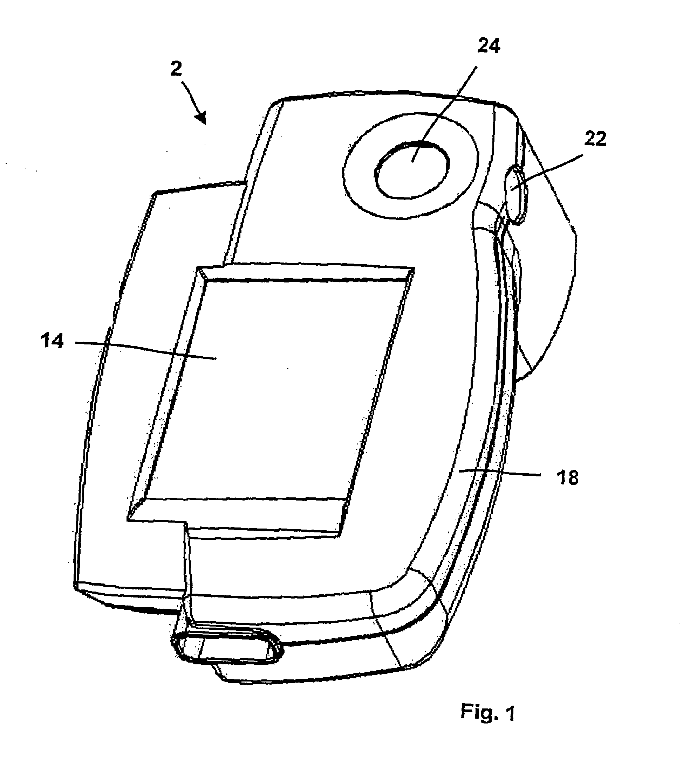

Fig. 1 zeigt für ein erstes Ausführungsbeispiel eines erfindungsgemäßen Handlesegerätes 2, dessen innerer Aufbau zunächst anhand verschiedener Ausführungsformen näher erläutert wird, bevor die von außen sichtbaren Merkmale an sich diskutiert werden.

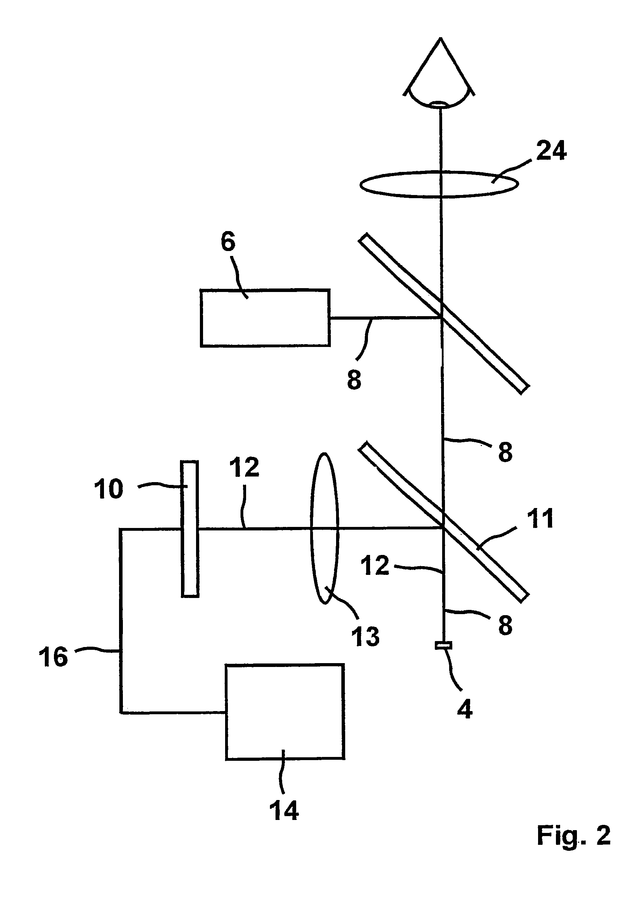

Fig. 2 zeigt ein erstes Ausführungsbeispiel eines Aufbaus der Komponenten des Handlesegerätes in einer schematischen Darstellung, mit dem die Informationen erfasst werden können, die in der auf einem Speichermedium 4 eingeschriebenen Punkteverteilung eines computergenerierten Lithogrammes enthalten sind.

Der Aufbau weist als Basiskomponenten eine Lichtquelle 6 zum Erzeugen eines Licht- bzw. Laserstrahls 8, Aufnahmemittel 10 zum Erfassen der Bilddaten des vom Lichtstrahl 8 von der Punkteverteilung des Lithogramms reproduzierten Hologramms (Strahlengang 12) und Anzeigemittel 14 zum Anzeigen der aus den Bilddaten erzeugten Anzeigedaten auf. Die Aufnahmemittel 10 sind über eine Datenleitung 16 mit den Anzeigemitteln 14 verbunden sind. Im in Fig. 2 dargestellten Aufbau sind zusätzlich ein Strahlteiler 11 und eine Abbildungslinse 13 vorgesehen, um das Licht des reproduzierten Hologramms aus dem Strahlengang des Lichtstrahls 8 auszukoppeln und um eine geeignete Abbildung des reproduzierten Hologramms auf der Bildebene der Aufnahmemittel 10 zu erreichen.

Sämtliche Komponenten 6, 10 und 14 (sowie ebenfalls weitere nachfolgend beschriebenen Komponenten des Lesegerätes) sind in einer tragbaren Handheld-Einheit zusammengefasst. Dieses ist insbesondere in Fig. 1 an dem Gehäuse 18 der Handheld-Einheit zu erkennen. Das Gehäuse 18 weist unter anderem das von außen sichtbare Anzeigemittel 14 auf, das beispielsweise als flacher Bildschirm, insbesondere als Display eines mobilen Telefons oder als Bildschirm eines Handheld-Computers (PDA) ausgebildet ist. Das Gehäuse 18 hat eine ergonomische äußere Form und kann leicht von einem Benutzer in einer Hand gehalten werden.

Die in Fig. 2 dargestellten Aufnahmemittel 10 sind elektronisch, beispielsweise als herkömmlicher CMOS- oder CCD-Chip ausgebildet. Daher wird auch an dieser Stelle eine herkömmliche und somit preiswerte Standardtechnologie verwendet.

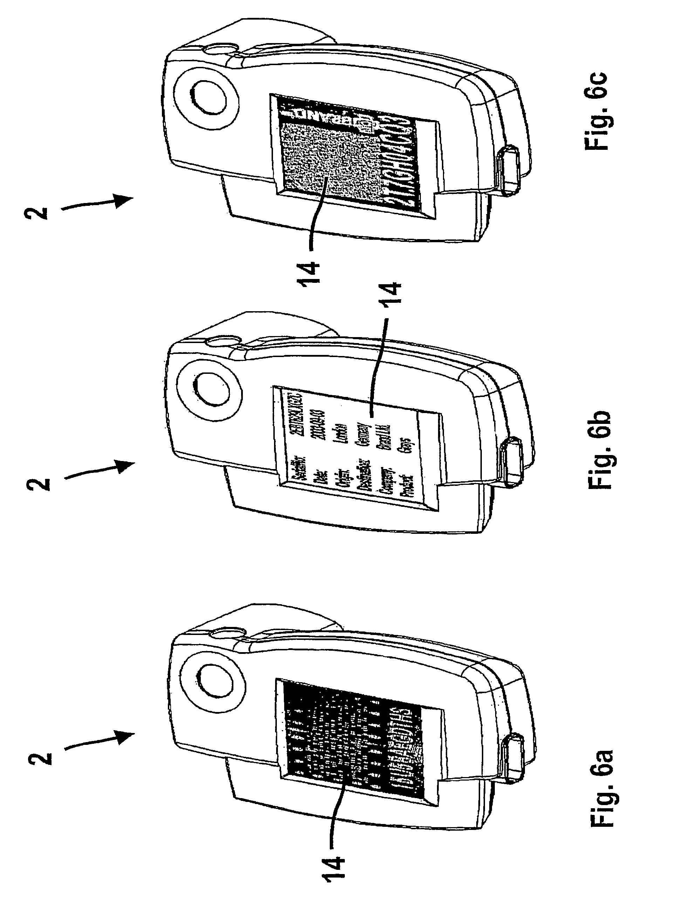

Bei dem in Fig. 2 dargestellten Ausführungsbeispiel sind die Aufnahmemittel 10 direkt mit den Anzeigemitteln 14 verbunden sind und die Anzeigemittel 14 stellen die Bilddaten als Anzeigedaten direkt dar. Dieses wird in Fig. 6a gezeigt. Die Anzeigemittel 14 zeigen die Bilddaten in der Weise, wie sie von den Aufnahmemitteln 10 erzeugt worden sind. Zu erkennen ist das aus dem Speichermedium 4 reproduzierte Hologramm mit einem schwarz/weißen Muster von einzelnen Bereichen eines zweidimensionalen Barcodes im oberen Abschnitt des Hologramms und einer Zeichenkombination bestehend aus Buchstaben und Zahlen am unteren Rand des Hologramms.

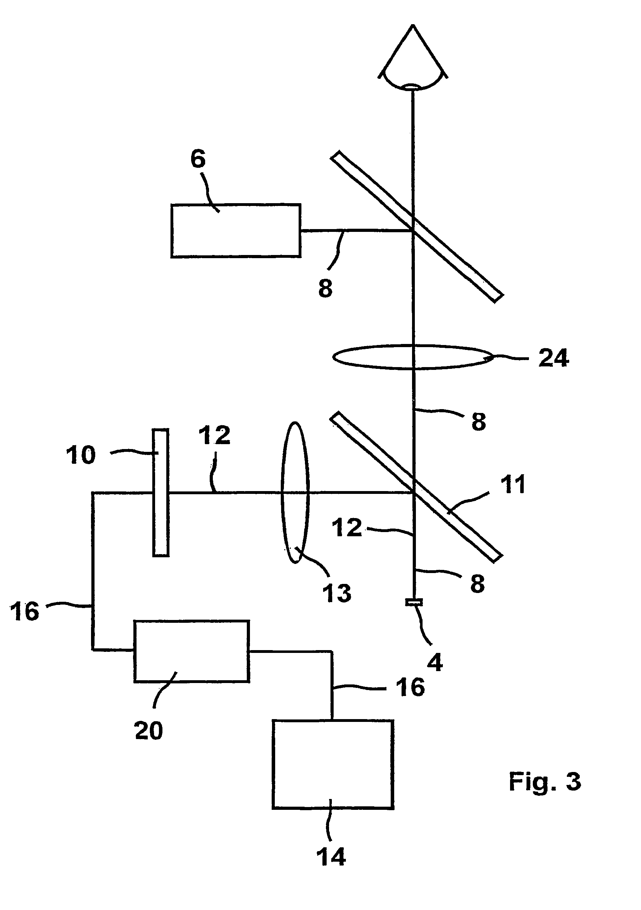

Fig. 3 zeigt ein zweites Ausführungsbeispiel eines erfindungsgemäßen Handlesegerätes 2, bei dem gleiche Bezugszeichen gleiche Bauteile kennzeichnen, wie sie zuvor anhand des ersten Ausführungsbeispiels erläutert worden sind.

Zusätzlich zu dem bereits beschriebenen Aufbau sind beim zweiten Ausführungsbeispiel Auswertemittel 20, die über Datenleitungen 16 mit den Aufnahmemitteln 10 und den Anzeigemitteln 14 verbunden sind, vorgesehen. Mit den Auswertemitteln 20 werden die Bilddaten ausgewertet und die Anzeigedaten erzeugt. Die Auswertemittel 20 sind elektronisch und bestehen aus mindestens einem Mikroprozessor, Speichermitteln sowie aus Ein- und Ausgangsschnittstellen. Die Speichermittel dienen dabei insbesondere zum Abspeichern einer Mehrzahl von aufgenommenen Bilddaten oder Auswertedaten. Auch hier kann auf herkömmliche und somit preiswerte Technik zurückgegriffen werden, beispielsweise können als Anzeigemittel 14 und als Auswertemittel 20 ein Handheld-Computer (PDA) verwendet werden.

Mit Hilfe der Auswertemittel 20 ist es möglich, die Bilddaten vor einem Anzeigen aufzubereiten. Dabei können zum einen die Anzeigedaten zumindest einen Teil der Bilddaten, vorzugsweise die gesamten Bilddaten umfassen. Zum anderen können die Anzeigedaten zumindest einen Teil der aus den Bilddaten abgeleiteten Daten darstellen. Mit anderen Worten können die Anzeigedaten einerseits ein oder mehrere Teile der von den Aufnahmemitteln 10 aufgenommenen Bilddaten sein. Andererseits können die Anzeigedaten die Informationen enthalten, die durch die Auswertung der in dem reproduzierten Hologramm enthaltenen Informationen erzeugt werden. Hierzu sei erneut auf ein Abbild eines ein- oder zweidimensionalen Barcodes hingewiesen, dessen Information erst nach einer Auswertung des Barcodemusters erhalten werden können.

Die beiden unterschiedlichen Informationsgehalte der auf den Anzeigemitteln 14 gezeigten Informationen sind in den Fig. 6a und 6b dargestellt. Während das Handlesegerät gemäß Fig. 6a - wie schon beschrieben - die von den Aufnahmemitteln 10 aufgenommenen Bilddaten des reproduzierten Hologramms zeigt, ist bei dem Handlesegerät gemäß Fig. 6b die aus dem zweidimensionalen Barcode des reproduzierten Hologramms Informationen in Schrift lesbar dargestellt. Es handelt sich vorliegend um ein Beispiel von Produktionsdaten eines handelsüblichen Produktes, das während der Produktion mit einem fälschungssicheren Hologrammlabel versehen worden ist. Somit lässt sich die Originalität des Produktes überprüfen. Dazu dient ebenfalls die Zeichenfolge im reproduzierten Hologramm gemäß Fig. 6a. Auch aus dieser Zeichenfolge kann - ggf. nur in Kombination mit den abgeleiteten Daten gemäß Fig. 6b - auf die Originalität des Produktes geschlossen werden.

Weiterhin ist in Fig. 1 zu erkennen, dass Schaltmittel 22 in Form eines Auslösers zum Einstellen der Art der Bilddaten vorgesehen sind. Damit kann der Benutzer zwischen den in Fig. 6 dargestellten Anzeigemodi umschalten. Ebenso ist es möglich, verschiedene Anzeigemodi miteinander zu kombinieren, also mindestens zwei der in Fig. 6 dargestellten Anzeigeinhalte miteinander zu kombinieren.

Wie in den Fig. 2 und 3 dargestellt ist, weist das Handlesegerät 2 eine Lupenlinse 24 als Justiermittel auf. Die Lupenlinse 24 ermöglicht es einem Benutzer (angedeutet durch das Auge), den vom Lichtstrahl 8 ausgeleuchteten Bereich des Speichermediums 4 bzw. des Objektes, auf dem das Speichermedium 4 angeordnet ist, direkt zu beobachten. Da der vom computergenerierten Lithogramm eingenommene Bereich eine Dimension von 1 mm² oder weniger aufweisen kann, ist es nicht ganz einfach, ohne eine Vergrößerung das Lithogramm zu treffen.

Dazu kann - nicht in den Figuren dargestellt - eine weitere Lichtquelle vorgesehen sein, die den Bereich des Lithogramms ausleuchtet, insbesondere mit weißem Licht. Dadurch wird die Erkennbarkeit des Lithogramms verbessert. Die Lichtquelle kann als LED ausgebildet sein. Zusätzlich kann auch noch ein Ziel- oder Fadenkreuz ausgeleuchtet werden, dessen reflektiertes Abbild vom Betrachter bzw. von den unten erläuterten weiteren Aufnahmemitteln erfasst werden kann.

Die Lupenlinse 24 ist in Fig. 2 außerhalb des Strahlengangs des Lichtstrahls 8 angeordnet, so dass der Lichtstrahl 8 nicht durch die Linse 24 beeinflusst wird. Diese Ausgestaltung ist auch in Fig. 1 zu erkennen. In der oberen rechten Ecke der Vorderseite des Handlesegerätes 2 ist die Lupenlinse 24 zu erkennen, durch die der Benutzer hindurch das Speichermedium beobachten kann.

In Fig. 3 ist die Lupenlinse 24 innerhalb des Strahlengangs 8 angeordnet. Dieser Aufbau hat zur Folge, dass der Lichtstrahl 8 von der Lichtquelle 6 mit einer leichten Divergenz erzeugt wird, die beim Durchlaufen der Lupenlinse 24 aufgehoben wird.

Eine weitere Hilfe beim Justieren des Handlesegerätes relativ zum Speichermedium 4 besteht darin, dass die Auswertemittel 20 gemäß Fig. 3 die fortlaufend von den Aufnahmemitteln 10 erfassten Bilddaten analysieren und bei einer geeigneten Position des reproduzierten Hologramms auf den Aufnahmemitteln 10 die Bilddaten festhalten. Der Justiervorgang wird also durch die Auswertemittel unterstützt, so dass die per Hand durchgeführte Justierung schneller und zuverlässiger ablaufen kann.

Des weiteren kann ein akustischer und/oder optischer Signalgeber vorgesehen sein, der dann aktiviert wird, wenn die Auswertemittel 20 die optimale Justierung festgestellt haben. Der Benutzer wird also umgehend darüber informiert, wenn die Reproduktion eines Hologramms erfolgreich aufgenommen worden ist.

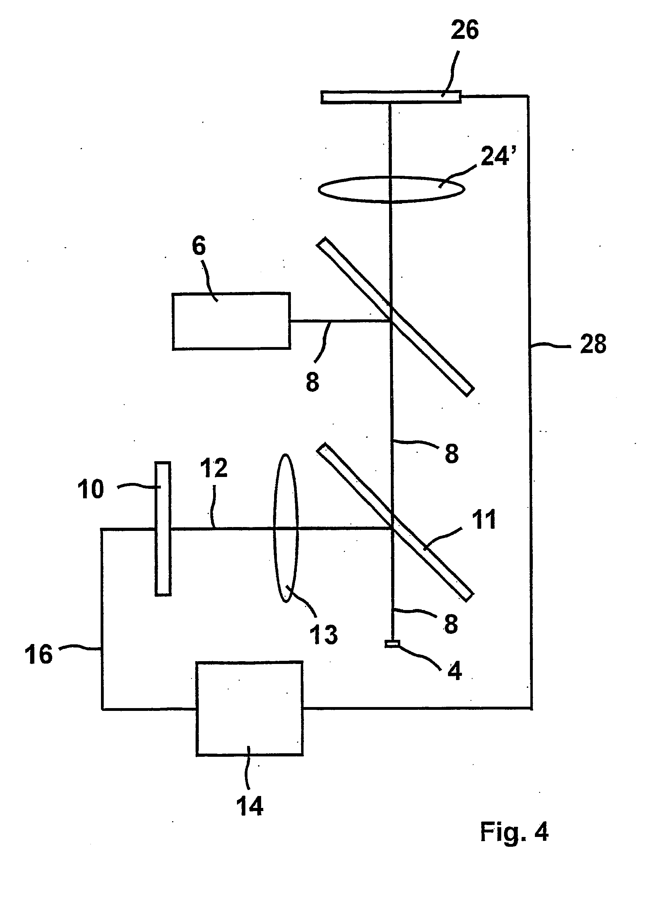

Fig. 4 zeigt ein drittes Ausführungsbeispiel eines erfindungsgemäßen Handlesegerätes, wobei gleiche Bezugszeichen gleiche Bauteile kennzeichnen, wie sie zuvor anhand der ersten beiden Ausführungsbeispiele erläutert worden sind. Der Aufbau des dritten Ausführungsbeispiels entspricht im wesentlichen dem Aufbau des ersten Ausführungsbeispiels.

Beim dritten Ausführungsbeispiel sind Aufnahmemittel 26 zum Aufnehmen des vom Speichermedium 4 reflektierten Lichtes vorgesehen. Die Aufnahmemittel 26 treten also an die Stelle des Auges des Benutzers des Handlesegerätes 2. Die Aufnahmemittel 26 sind über eine Datenleitung 28 mit den Anzeigemitteln 14 verbunden, so dass das reale Bild des Speichermediums 4 direkt angezeigt und vom Benutzer beobachtet werden kann.

Bei der Ausgestaltung der Optik ist dann zu berücksichtigen, dass die Lupenlinse 24' eine andere Brennweite als in Fig. 2 die Lupenlinse 24 hat, damit die Abbildung der Fläche des Lithogramms auf den Aufnahmemitteln verbessert, also stärker vergrößert wird.

Dieser technische Erfolg kann auch durch eine in den Strahlengang einschwenkbare zusätzliche Linse erreicht werden, um dem Benutzer zum einen für ein Suchen des Lithogramms eine größere Fläche darzustellen und zum anderen zum Erkennen der Mikroschrift bzw. des Mikrobildes eine stärkere Vergrößerung zu bieten.

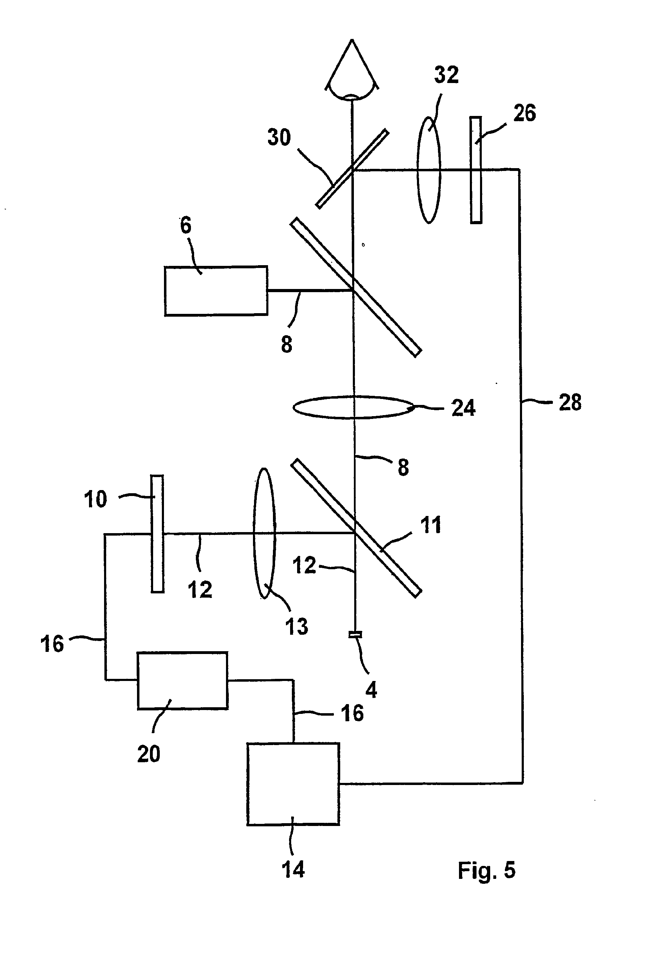

Fig. 5 zeigt ein viertes Ausführungsbeispiel eines erfindungsgemäßen Handlesegerätes, wobei gleiche Bezugszeichen gleiche Bauteile kennzeichnen, wie sie zuvor anhand der ersten drei Ausführungsbeispiele erläutert worden sind. Der Aufbau des vierten Ausführungsbeispiels entspricht im wesentlichen dem Aufbau des zweiten Ausführungsbeispiels.

Beim vierten Ausführungsbeispiel sind ebenfalls Aufnahmemittel 26 zum Aufnehmen des vom Speichermedium 4 reflektierten Lichtes vorgesehen. Die Aufnahmemittel 26 stellen eine Alternative für das Auge des Benutzers des Handlesegerätes 2 dar. Denn die Aufnahmemittel 26 sind über einen Strahlteiler 30 angekoppelt, ohne den direkten Strahlengang für das beobachtende Auge zu stören. Die Aufnahmemittel 26 weisen eine zusätzliche vergrößernde Optik 32 auf und sind über eine Datenleitung 28 mit den Anzeigemitteln 14 verbunden, so dass das reale Bild des Speichermediums 4 direkt angezeigt und vom Benutzer beobachtet werden kann.

Die Darstellung des realen Bildes der Punkteverteilung des Lithogramms ist in Fig. 6c dargestellt. Zu erkennen ist dabei die Punkteverteilung des computergenerierten Lithogramms in der linken oberen Ecke sowie eine Zeichenfolge in Mikroschrift und ein Logo als Mikroabbildung.

Je nach Aufbau des dritten oder vierten Ausführungsbeispiels können bei der Beobachtung des Hologramms auch die in den Fig. 6a und 6b dargestellten Bilder auf den Anzeigemitteln 14 angezeigt werden.

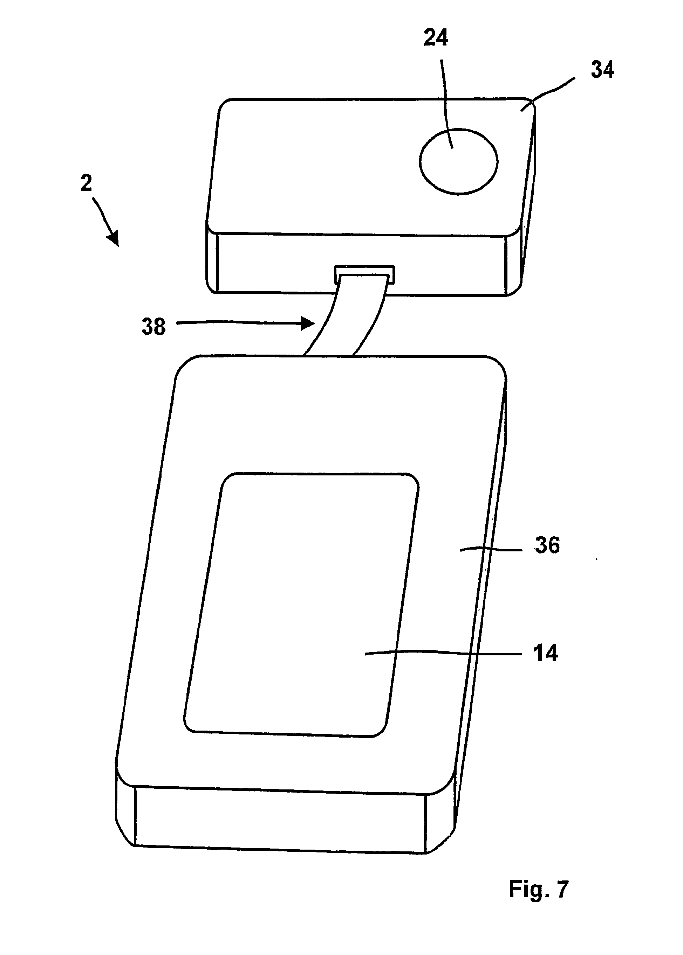

Fig. 7 zeigt eine weitere Ausgestaltung der vorliegenden Erfindung. Bei dem dargestellten Ausführungsbeispiel ist das Handlesegerät 2 in einen optischen Block 34 und einen Auswerteblock 36 unterteilt, also modular aufgebaut.

Der optische Block 34 weist im Inneren zumindest die Lichtquelle und die Aufnahmemittel sowie mögliche weitere zuvor beschriebene Komponenten auf. Der Auswerteblock 36 weist zumindest die Auswertemittel und die Anzeigemittel 14 auf. Der optische Block 34 und der Auswerteblock 36 sind über eine elektronische Schnittstelle 38 miteinander verbunden. Die elektronische Schnittstelle weist bspw. ein Flachbandkabel und entsprechende Steckverbindungen auf beiden Seiten auf. Hierbei sind die Standardschnittstellen für Schnittstellenkarten, beispielsweise eine Compact Flash Karte (CF-Steckkarte) möglich. Die Schnittstelle kann auch optisch bspw. als Infrarotschnittstelle oder als Funkschnittstelle ausgebildet sein.

Der optische Block 34 und der Auswerteblock 36 sind in bevorzugter Weise auf einer gemeinsamen Halterung (nicht dargestellt) angeordnet, um die Handheld-Einheit zu bilden und leichter handhabbar zu sein. Dabei kann eine der beiden Blöcke 34 oder 36 eine integral damit ausgebildete Halterung aufweisen, in die der jeweils andere Block eingesetzt werden kann. Bevorzugt weist dabei der optische Block 34 die Halterung auf.

Denn es ist bevorzugt, dass der Auswerteblock 36 als serienmäßiger Handheld-Computer ausgebildet ist. Damit wird in Kombination mit dem einem geringeren zeitlichen Wandel unterzogenen optischen Block 34 eine langfristig nutzbare Kombination geschaffen, bei der auch ein Austausch der Auswerteinheit 36 dann möglich ist, wenn der ursprüngliche Handheld-Computer nicht mehr nachzubeschaffen ist.

## Patentansprüche

1. Lesegerät zum Auslesen von computergenerierten Lithogrammen, die in einem Speichermedium (4) eingeschrieben sind,
- mit einer Lichtquelle (6) zum Erzeugen eines Lichtstrahls (8),
- mit Aufnahmemitteln (10) zum Erfassen der vom Lichtstrahl (8) durch eine Beleuchtung des Lithogramms erzeugten Bilddaten,
- mit Anzeigemitteln (14) zum Anzeigen der aus den Bilddaten erzeugten Anzeigedaten und
- wobei die Aufnahmemittel (10) geeignet sind, die Bilddaten eines vom Lichtstrahl (8) reproduzierten Hologramms zu erfassen,
- wobei sämtliche Komponenten in einer tragbaren Handheld-Einheit zusammengefasst sind,
**dadurch gekennzeichnet,**
- **dass** das Lesegerät eine Lupenlinse (24) als Justiermittel zum freihändigen Justieren des Lesegeräts relativ zur Position des Lithogrammes aufuveist.

2. Lesegerät nach Anspruch 1,
**dadurch gekennzeichnet,**
**dass** die Aufnahmemittel (10; 26) elektronisch, insbesondere als CMOS-Chip oder als CCD-Chip ausgebildet sind.

3. Lesegerät nach Anspruch 1 oder 2,
**dadurch gekennzeichnet,**
**dass** die Anzeigemittel (14) als ein flacher Bildschirm, insbesondere als Display eines mobilen Telefons oder als Bildschirm eines Handheld-Computers ausgebildet ist.

4. Lesegerät nach einem der Ansprüche 1 bis 3,
**dadurch gekennzeichnet,**
**dass** Auswertemittel (20) zum Auswerten der Bilddaten und zum Erzeugen der Anzeigedaten vorgesehen sind.

5. Lesegerät nach Anspruch 4,
**dadurch gekennzeichnet,**
**dass** Schaltmittel zum Einstellen der Art der Bilddaten vorgesehen sind.

6. Lesegerät nach einem der Ansprüche 1 bis 5,
**dadurch gekennzeichnet,**
**dass** Speichermittel zum Abspeichern einer Mehrzahl von aufgenommenen Bilddaten vorgesehen sind.

7. Lesegerät nach einem der Ansprüche 1 bis 6,
**dadurch gekennzeichnet,**
**dass** die Lupenlinse (24) außerhalb des Strahlengangs des Lichtstrahls (8) angeordnet ist.

8. Lesegerät nach einem der Ansprüche 1 bis 6,
**dadurch gekennzeichnet,**
**dass** die Lupenlinse (24) innerhalb des Strahlengangs des Lichtstrahls (8) angeordnet ist.

9. Lesegerät nach einem der Ansprüche 1 bis 8,
**dadurch gekennzeichnet,**
**dass** eine Lichtquelle zum Ausleuchten des Lithogramms, insbesondere eine LED, vorzugsweise eine weißes Licht erzeugende LED vorgesehen ist.

10. Lesegerät nach einem der Ansprüche 4 bis 9,
**dadurch gekennzeichnet,**
**dass** die Auswertemittel (20) derart ausgebildet sind, dass die fortlaufend von den Aufnahmemitteln erfassten Bilddaten von den Auswertemitteln (20) analysiert werden und dass bei einer geeigneten Position des reproduzierten Hologramms auf den Aufnahmemitteln (10) die Bilddaten von den Auswertemitteln (20) festhalten werden.

11. Lesegerät nach Anspruch 10,
**dadurch gekennzeichnet,**
**dass** ein akustischer und/oder optischer Signalgeber vorgesehen ist.

12. Lesegerät nach einem der Ansprüche 1 bis 11,
**dadurch gekennzeichnet,**
**dass** die Aufnahmemittel (26) zum Aufnehmen des vom Speichermedium (4) reflektierten Lichtes vorgesehen sind.

13. Lesegerät nach Anspruch 12,
**dadurch gekennzeichnet,**
**dass** eine dem Benutzer eine stärkere Vergrößerung bietende, in den Strahlengang einschwenkbare zusätzliche Linse vorgesehen ist.

14. Lesegerät nach einem der Ansprüche 1 bis 13,
**dadurch gekennzeichnet,**
- **dass** in einem optischen Block (34) zumindest die Lichtquelle (6) und die Aufnahmemittel (10) angeordnet sind,
- **dass** in einem Auswerteblocks (36) zumindest die Auswertemittel (20) und die Anzeigemittel (14) angeordnet sind und
- **dass** der optische Block (34) und der Auswerteblock (36) über eine elektronische und/oder optische Schnittstelle (38) miteinander verbunden sind.

15. Lesegerät nach Anspruch 14,
**dadurch gekennzeichnet,**
**dass** der optische Block (34) und der Auswerteblock (36) auf einer gemeinsamen Halterung angeordnet sind.

## Claims

1. Reader for reading computer-generated lithograms which are written into a storage medium (4),
- having a light source (6) for generating a light beam (8),
- having recording means (10) for acquiring the image data generated by the light beam (8) by illuminating the lithogram,
- having display means (14) for displaying the display data generated from the image data, and
- the recording means (10) being suitable for acquiring the image data of a hologram reproduced by the light beam (8),
- all the components being combined in a portable handheld unit,
**characterized in that**
- the reader has a magnifying lens (24) as adjusting means for the free-handed adjustment of the reader relative to the position of the lithogram.

2. Reader according to Claim 1, **characterized in that** the recording means (10; 26) are electronic, in particular are formed as a CMOS chip or as a CCD chip.

3. Reader according to Claim 1 or 2, **characterized in that** the display means (14) is formed as a flat monitor, in particular as a display of a mobile telephone or as a monitor of a handheld computer.

4. Reader according to one of Claims 1 to 3, **characterized in that** evaluation means (20) are provided for evaluating the image data and for generating the display data.

5. Reader according to Claim 4, **characterized in that** switching means are provided for setting the type of image data.

6. Reader according to one of Claims 1 to 5, **characterized in that** storage means are provided for storing a plurality of items of recorded image data.

7. Reader according to one of Claims 1 to 6, **characterized in that** the magnifying lens (24) is arranged outside the beam path of the light beam (8).

8. Reader according to one of Claims 1 to 6, **characterized in that** the magnifying lens (24) is arranged inside the beam path of the light beam (8).

9. Reader according to one of Claims 1 to 8, **characterized in that** a light source is provided for illuminating the lithogram, in particular an LED, preferably an LED that generates white light.

10. Reader according to one of Claims 4 to 9, **characterized in that** the evaluation means (20) are formed such that the image data acquired continuously by the recording means are analyzed by the evaluation means (20) and, given a suitable position of the reproduced hologram, the image data are recorded by the evaluation means (20) on the recording means (10).

11. Reader according to Claim 10, **characterized in that** an acoustic and/or optical signal generator is provided.

12. Reader according to one of Claims 1 to 11, **characterized in that** the recording means (26) are provided for recording the light reflected from the storage medium (4).

13. Reader according to Claim 12, **characterized in that** an additional lens that offers the user a higher magnification and can be pivoted into the beam path is provided.

14. Reader according to one of Claims 1 to 13, **characterized in that**
- at least the light source (6) and the recording means (10) are arranged in an optical block (34),
- at least the evaluation means (20) and the display means (14) are arranged in an evaluation block (36), and
- the optical block (34) and the evaluation block (36) are connected to each other via an electronic and/or optical interface (38).

15. Reader according to Claim 14, **characterized in that** the optical block (34) and the evaluation block (36) are arranged on a common holder.

## Revendications

1. Appareil de lecture pour extraire des lithogrammes produits par ordinateur enregistrés dans un support de mémoire (4) ;
- avec une source lumineuse (6) pour produire un faisceau lumineux (8) ;
- avec des moyens de réception (10) pour détecter les données d'image produites par un faisceau lumineux (8) par éclairage du lithogramme ;
- avec des moyens d'affichage (14) pour afficher les données d'affichage produites à partir des données d'image ; et
- les moyens de réception (10) étant adaptés pour détecter les données d'image d'un hologramme reproduit par le faisceau lumineux (8) ;
- l'ensemble des composants étant réunis dans une unité de poche portable ;
**caractérisé en ce que** :
- l'appareil de lecture comporte une lentille grossissante (24) comme moyen d'ajustement utilisé pour ajuster sans les mains l'appareil de lecture par rapport à la position du lithogramme.

2. Appareil de lecture selon la revendication 1, **caractérisé en ce que** les moyens de réception (10 ; 26) prennent une forme électronique et notamment la forme d'une puce CMOS ou CCD.

3. Appareil de lecture selon la revendication 1 ou 2, **caractérisé en ce que** les moyens d'affichage (14) prennent la forme d'un écran plat, notamment de l'écran d'un téléphone mobile ou de l'écran d'un ordinateur de poche.

4. Appareil de lecture selon l'une quelconque des revendications 1 à 3, **caractérisé en ce que** des moyens d'analyse (20) sont prévus pour analyser les données d'image et pour produire des données d'affichage.

5. Appareil de lecture selon la revendication 4, **caractérisé en ce que** des moyens de commutation sont prévus pour régler le type de données d'image.

6. Appareil de lecture selon l'une quelconque des revendications 1 à 5, **caractérisé en ce que** des moyens de mise en mémoire sont prévus pour mettre en mémoire une pluralité de données d'image reçues.

7. Appareil de lecture selon l'une quelconque des revendications 1 à 6, **caractérisé en ce que** la lentille grossissante (24) est disposée à l'extérieur de la trajectoire de rayonnement du faisceau lumineux (8).

8. Appareil de lecture selon l'une quelconque des revendications 1 à 6, **caractérisé en ce que** la lentille grossissante (24) est disposée à l'intérieur de la trajectoire de rayonnement du faisceau lumineux (8).

9. Appareil de lecture selon l'une quelconque des revendications 1 à 8, **caractérisé en ce qu'**une source lumineuse est prévue pour éclairer le lithogramme, notamment une DEL, de préférence une DEL produisant de la lumière blanche.

10. Appareil de lecture selon l'une quelconque des revendications 4 à 9, **caractérisé en ce que** les moyens d'analyse (20) sont réalisés de telle sorte que les données d'image détectées consécutivement par les moyens de réception soient analysées par les moyens d'analyse (20) et qu'en cas de position adaptée de l'hologramme reproduit sur les moyens de réception (10), les données d'image soient conservées par les moyens d'analyse (20).

11. Appareil de lecture selon la revendication 10, **caractérisé en ce qu'**un émetteur de signaux acoustique et/ou optique est prévu.

12. Appareil de lecture selon l'une quelconque des revendications 1 à 11, **caractérisé en ce que** les moyens de réception (26) sont prévus pour recevoir la lumière réfléchie par le support de mémoire (4).

13. Appareil de lecture selon la revendication 12, **caractérisé en ce qu'**une lentille supplémentaire est prévue, celle-ci offrant à l'utilisateur un plus fort grossissement et pouvant être amenée dans la trajectoire de rayonnement par basculement.

14. Appareil de lecture selon l'une quelconque des revendications 1 à 13, **caractérisé en ce que** :
- au moins la source lumineuse (6) et les moyens de réception (10) sont disposés dans un bloc optique (34) ;
- au moins les moyens d'analyse (20) et les moyens d'affichage (14) sont disposés dans un bloc d'analyse (36) ; et
- le bloc optique (34) et le bloc d'analyse (36) sont reliés entre eux par l'intermédiaire d'une interface (38) électronique et/ou optique.

15. Appareil de lecture selon la revendication 14, **caractérisé en ce que** le bloc optique (34) et le bloc d'analyse (36) sont disposés sur un support commue.
